# EUROPÄISCHE PATENTSCHRIFT

(11) **EP 0 737 287 B1**
(45) Veröffentlichungstag und Bekanntmachung des Hinweises auf die Patenterteilung: **22.07.1998**
(21) Anmeldenummer: 95903249.1
(22) Anmeldetag: 12.12.1994
(51) Int. Cl.: F16L 15/06, E21B 17/042

(54) **ROHRVERBINDER**
PIPE FITTING
RACCORD DE TUYAUX

(30) Priorität: 30.12.1993 DE 4345119
(43) Veröffentlichungstag der Anmeldung: 16.10.1996
(73) Patentinhaber: MANNESMANN Aktiengesellschaft, 40213 Düsseldorf (DE)
(72) Erfinder: BUNSEN, Christoph, Dr.-Ing., D-49721 Hilden (DE); NIMTSCHECK, Hansjoachim, Dipl.-Ing., D-47447 Moers (DE)
(74) Vertreter: Meissner, Peter E., Dipl.-Ing.
(86) Internationale Anmeldenummer: DE9401517
(87) Internationale Veröffentlichungsnummer: WO9518329

(56) Entgegenhaltungen:
- DE-A- 3 431 808

## Beschreibung

Die Erfindung betrifft einen Rohrverbinder gemäß dem Gattungsbegriff des Hauptanspruches.

Rohrverbinder dienen zum Verbinden rohrförmiger Elemente, beispielsweise von Rohrleitungen, die insbesondere unter Druck stehende Fluide, wie beispielsweise Gas oder Öl, befördern. Bei der Suche nach Öl oder Gas werden diese Rohre als Futter- oder Förderrohre eingesetzt.

Die hier betrachteten Rohrverbindungen erfolgen üblicherweise mit Gewinden, einem Außengewinde auf einem Zapfenelement und einem Innengewinde in einem Muffenelement, die miteinander verschraubt werden. Bezüglich der nach dem Verschrauben eindeutigen Positionierung des Muffen- und Zapfenelementes zueinander unterscheidet man Rohrverbinder mit einer aufgebrachten Markierung und solche, die ein zusätzliches Stoßelement als Innen- oder Außenschulter aufweisen. Dieses Schulterelement kann zusätzlich die Funktion einer Dichtung übernehmen. Die Schulter hesteht im wesentlichen aus ringförmigen Flächen, die beispielsweise am freien Ende des Zapfenelementes und der Innenseite des Muffenelementes angeordnet sind und durch das Zusammenschrauben fest aufeinander gepreßt werden. Dabei wird das Zapfenelement zusammengedrückt und das Muffenelement zwischen der Schulter und dem Gewinde gedehnt. Die im Zapfenelement auftretende Druckspannung und die dem Muffenelement entsprechende Zugspannung werden überwiegend nur durch die wenigen letzten Gewindegänge des Gewindes, die benachbart zu den Schulterflächen liegen, aufgenommen. Die übrigen Gewindegänge sind nur äußerst gering belastet. Dementsprechend sind die Flanken der belasteten Gewindegänge hoch beansprucht. Diese hohen Spannungen werden durch äußere Belastungen der Verbindung, insbesondere durch axialen Druck, aber auch durch Innen- und Außendruck sowie durch Biegung erhöht, so daß die Gesamtspannung einen Wert erreichen kann, der größer ist als die zulässige Streckgrenze. Axialer Zug hingegen bedeutet zusätzliche Zugspannung in der Verbindung und kann die Druckspannung im Stoß aufheben und damit seine Wirkung der Positionierung und Dichtung aufheben.

Der verhältnismäßig kurze axiale Abstand zwischen den die Last tragenden Gängen der Gewinde und den Schulterflächen begrenzt die in den Elementen induzierte Verformungsenergie, so daß eine leichte relative Axialbewegung der Elemente des Rohrverbinders die Wirksamkeit der Abdichtung zwischen den Abdichtflächen erheblich beeinträchtigen kann.

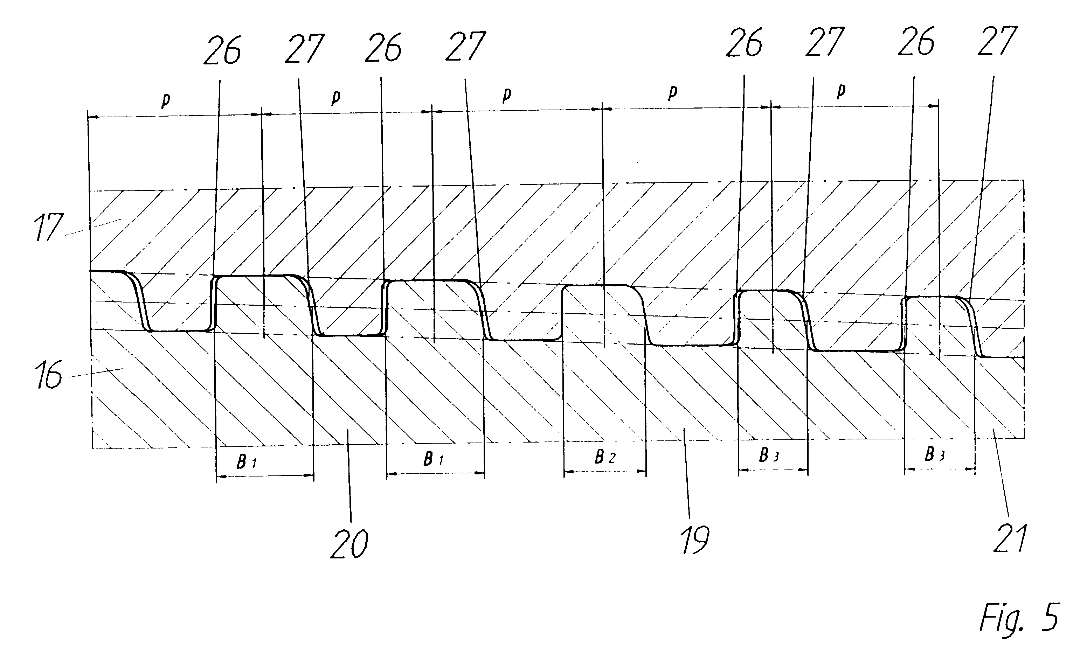

Aus der Re 30,647 sowie US-PS 4,703,954 ist ein Rohrverbinder bekannt, dessen Zapfen- und Muffenelement ein Gewinde mit negativen Last- und Führungsflanken aufweist. Der Querschnitt eines solchen Gewindes wird als schwalbenschwanzförmig bezeichnet, bei dem die Zahnfußbreite immer geringer ist als die Zahnkopfbreite. Der Vorteil eines Gewindes mit negativen Last- und Führungsflanken ist darin zu sehen, daß unter Last eine radiale Trennung des Zapfen- und Muffenelementes nicht möglich ist Rind damit die Gesamtspannungsverhältnisse niedriger liegen. Nachteilig ist, daß eine solche Rohrverbindung mit konstanter Zahn- und Lückenbreite nur zusammenschraubbar ist, wenn es sich um ein zylindrisches Gewinde handelt. Wegen der Wanddickenschwächung im Gewindeauslaufbereich wird aber üblicherweise ein kegeliges Gewinde gewählt, und dann ist das zuvor beschriebene Gewinde nicht einfädelbar. Offenbart ist in beiden genannten Schriften deshalb eine Gewindeform, bei der die Zahnbreite des einen Elementes in einer Richtung kontinuierlich von Gewindeanfang bis Gewindeende zunimmt und die Zahnbreite des anderen damit verschraubbaren Elementes in der umgekehrten Richtung zunimmt. Gemäß Figur 5 der Re 30,647 führt das dazu, daß bei Beginn des Zusammenschraubens die geringeren Zahnbreiten des einen Elementes in die größeren Zahnlücken des anderen Elementes einfädelbar sind bis am Ende der Verschraubung die Führungs- und Lastflanken gegenseitig zur Anlage kommen. Dies bildet die Verschraubbegrenzung für den Rohrverbinder, so daß ringförmige Abdichtflächen (Stoß) prinzipiell nicht erforderlich sind. Diese Art der Gewindeverbindung wird in der Fachliteratur als "wedge-thread" bezeichnet (siehe Prospekt der Firma Hydril, Bulletin 2641). Nachteilig bei diesem Gewinde ist der hohe Fertigungsaufwand, da beginnend mit einer konstanten Steigung zuerst ein Grundgewinde geschnitten und anschließend die kontinuierlich zunehmende Lückenweite nachgeschnitten werden muß. Probleme bereitet auch die Herstellung des schwalbenschwanzförmigen Querschnittes hinsichtlich der Winkelgenauigkeit und Oberflächenqualität in den Eckbereichen. Die beidseitig negativen Flanken erschweren zudem das Einfädeln der Verbindung.

Ein anderer Lösungsansatz ist in der DE 34 31 808 offenbart. Bei diesem Vorschlag weist der Rohrverbinder einen Zwischenabschnitt des Gewindes zwischen den Enden des Zapfen- und Muffenelementes auf, in dem beide Elemente die gleiche Ganghöhe haben. In den Endenabschnitten sind die Ganghöhen zwischen Zapfen- und Muffenelement verschieden, und zwar in Abhängigkeit von der Lage des Stoßes.

Wenn die ringförmigen Abdichtflächen (Stoß) auf der Rohrinnenseite liegen, dann weist das Gewinde des Zapfenelementes gegenüber dem Gewinde des Muffenelementes eine größere Ganghöhe auf. Wenn die Abdichtfläche auf der Rohraußenseite liegt, ist es umgekehrt. Durch die vorgeschlagene Anordnung wird die vom Stoß herrührende Reaktionskraft gleichmäßiger auf das Gewinde übertragen. Nachteilig ist, daß die Herstellung eines solchen Gewindes mit drei unterschiedliche Steigung aufweisenden Abschnitten aufwendig ist. Das Zahnflankenspiel ist über die Gewindelänge gesehen unterschiedlich, um die unterschiedlichen Steigungen auszugleichen und eine Verschraubbarkeit zu gewährleisten.

Aufgabe der Erfindung ist es, einen einfach herzustellenden Rohrverbinder zu entwickeln, der leicht einfädelbar ist und unter Verzicht eines Stoßes oder einer Schulter eine Verschraubbegrenzung aufweist.

Diese Aufgabe wird mit den im kennzeichnenden Teil des Anspruches 1 angegebenen Merkmalen gelöst. Vorteilhafte Weiterbildungen sind Bestandteil von Unteransprüchen.

Die vorgeschlagene Gewindeausbildung führt beim Verschrauben zu einer Verspannung in einem Teilbereich des Gewindes, indem in diesem Bereich vorzugsweise ein Zapfenzahn eine sich über den Gewindeumfang verjüngende Breite aufweist und eine sich im gleichen Maß verjüngende Lücke in der Muffe vorhanden ist. Dieser Teilbereich des Gewindes wirkt dabei wie ein umlaufender Keil. Im übrigen Bereich des Gewindes sind Zahnbreite und Zahnlücke jeweils konstant, auch die Steigung der Bereiche außerhalb des umlaufenden Keils ist konstant und in Muffe und Zapfen identisch, was eine einwandfreie Verschraubung ermöglicht.

Die Konstruktion schließt einen zusätzlichen Stoß etwa als Sekundärstoß zur Aufnahme extremer Axialdruckbelastung nicht aus.

Der Keilgang sollte mindestens einen halben Gang betragen, damit ausreichend Reibungsfläche für die gewünschte Verspannung zur Verfügung steht. Bei einem zweigängigen Gewinde kann dies noch einmal halbiert werden. Aus Gründen der gleichmäßigen Lastverteilung über den Umfang ist aber in der Regel mindestens ein voller Keilgang bzw. ein mehrfaches davon vorgesehen. Der Gewindeabschnitt.mit diesem Keilgang bzw. Keilgängen zeichnet sich dadurch aus, daß die Zahnbreite verschieden ist von dem benachbarten Abschnitt bzw. den unmittelbar benachbarten Abschnitten. In diesem Abschnitt bildet der Zapfenzahn einen Übergang von einem schmaleren Zahn und breiterer Lücke mit jeweils konstanten Breiten zu einem breiteren Zahn und schmaler Lücke mit wiederum jeweils konstanten Breiten. In der Muffe sind die Verhältnisse genau umgekehrt. Dieser abweichende Abschnitt kann am Ende, am Anfang oder mittig des Gewindes angeordnet werden. Außerdem ist es möglich, mehr als einen solchen Abschnitt vorzusehen, z. B. am Anfang und am Ende oder zwischen drei Bereichen mit jeweils konstanten Zahn- und Lückenweiten. Der abweichende Abschnitt ist sowohl im Zapfen als auch im Muffenelement vorgesehen, wobei nach der Verschraubung diese Abschnitte genau einander gegenüberliegen.

Die Änderung der Zahnbreite und benachbarter Lückenweite wird in der Weise realisiert, daß man das Verhältnis von Zahnbreite zu benachbarter Zahnlücke verändert. Beispielsweise seien zwei geometrisch konstante Abschnitte und zwischen diesen zwei Keilgänge vorgesehen. Dann wird das Ausgangsverhältnis von mittlerer Zahnbreite zu mittlerer Zahnlücke von beispielsweise 1,343 geändert im ersten Keilgang auf 1,134, im zweiten Keilgang auf 0,846, um dann überzugehen in ein konstantes Verhältnis von 0,712. Diese Zahlen dürfen nicht absolut betrachtet werden, sondern nur qualitativ. Beispielsweise kann das Ausgangsverhältnis auch 1 oder weniger als 1 betragen. Entscheidend ist nur, daß im abweichenden Abschnitt pro Keilgang dieses Verhältnis geändert wird und im daran angrenzenden Abschnitt mit konstanter Ganghöhe überzugehen in ein Verhältnis, das qualitativ umgekehrt ist. Mit anderen Worten ausgedrückt heißt das, daß beispielsweise für das Zapfenelement eine große mittlere Zahnbreite kombiniert mit einer kleineren Zahnlücke im abweichenden Abschnitt die Zahnbreite abnimmt und im angrenzenden Abschnitt mit konstanter Ganghöhe die Zahnbreite geringer ist im Vergleich zur Zahnlücke. Voraussetzung für die Verschraubbarkeit ist generell, daß die jeweils breitere Zahnlücke im Muffen- und Zapfengewinde sich im jeweiligen Gewindeanfang stirnseitig betrachtet, befindet. Das erfindungsgemäße Prinzip der Anordnung einer lokalen Verspannung des Gewindes im verschraubten Zustand ist unabhängig von der Zahnform, d.h. ob Spitz- oder Trapez-, API-Rundgewinde oder Buttress-Gewinde oder ähnliches und unabhängig davon, ob das Gewinde zylindrisch oder kegelig ist.

Ausgehend von diesem Grundprinzip kann man die gewünschte Spannungsverteilung, die durch äußere Lasten, im besonderen Axialzug und Axialdruck, bedingt werden, beeinflussen. Notwendig ist dafür eine geeignete Auslegung des Zahnflankenspiels durch eine solche Ausformung des Keilganges, daß das Flankenspiel in den benachbarten Gewindebereichen an der Führungs- oder Lastflanke oder an beiden Flanken entsteht. Im Übergangsbereich wird das Spiel durch die Keilwirkung aufgehoben.

Das zuvor erläuterte Prinzip einer lokalen Verkeilung des Gewindes ist auch erreichbar, wenn man statt der Änderung der Zahnbreite, die im Prinzip eine Änderung in axialer Richtung bedeutet, eine Änderung der Zahnhöhe, also in radialer Richtung vornimmt. Dieses nicht von Anspruch 1 umfaßte Verfahren wird man aber nur selten anwenden, da eine erforderliche Mindestwanddicke, insbesondere im Zapfenteil vorhanden sein muß, um die Zahnhöhenvariante unterzubringen. Zudem führt eine Keilwirkung in der Zahnhöhe zu zusätzlichen radialen und tangentialen Spannungen beim Verschrauben, die eine Trennung von Muffen- oder Zapfenelement bedingen können. Theoretisch ist sogar eine Kombination von Zahnhöhenveränderung in Verbindung mit der Änderung der Zahnbreite vorstellbar. Bei entsprechender geometrischer Auslegung und idealen Verhältnissen könnte man auf diese Weise ein gasdichtes Gewinde erstellen. Die praktische Umsetzung ist aber mit vielen Schwierigkeiten verbunden, so daß man diese Variante in der Praxis vorerst kaum anwenden wird.

In der Zeichnung wird anhand einiger Ausführungsbeispiele das vorgeschlagene Prinzip der lokalen Verspannung näher erläutert.

Es zeigen:
- Figur 1: einen Längsschnitt durch einen Rohrverbinder mit Muffe
- Figur 2: einen Längsschnitt durch einen Rohrverbinder als Integralverbindung
- Figur 3: im Längsschnitt einen Gewindebereich mit einer erfindungsgemäßen lokalen Verspannung
- Figur 4: im vergrößerten Maßstab im Längsschnitt den erfindungsgemäßen Keilgang
- Figur 5: wie Fig. 4 aber unter Berücksichtigung des Flankenspiels
- Figur 6: im vergrößerten Maßstab im Längsschnitt eine nicht zur Erfindung gehörige Variante der lokalen Verspannung

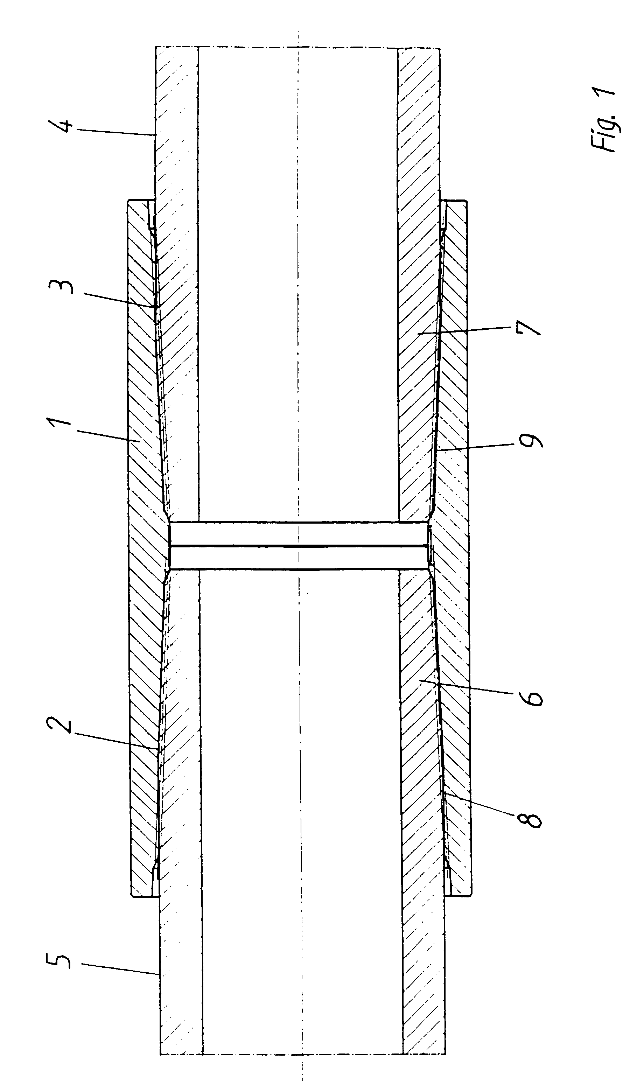

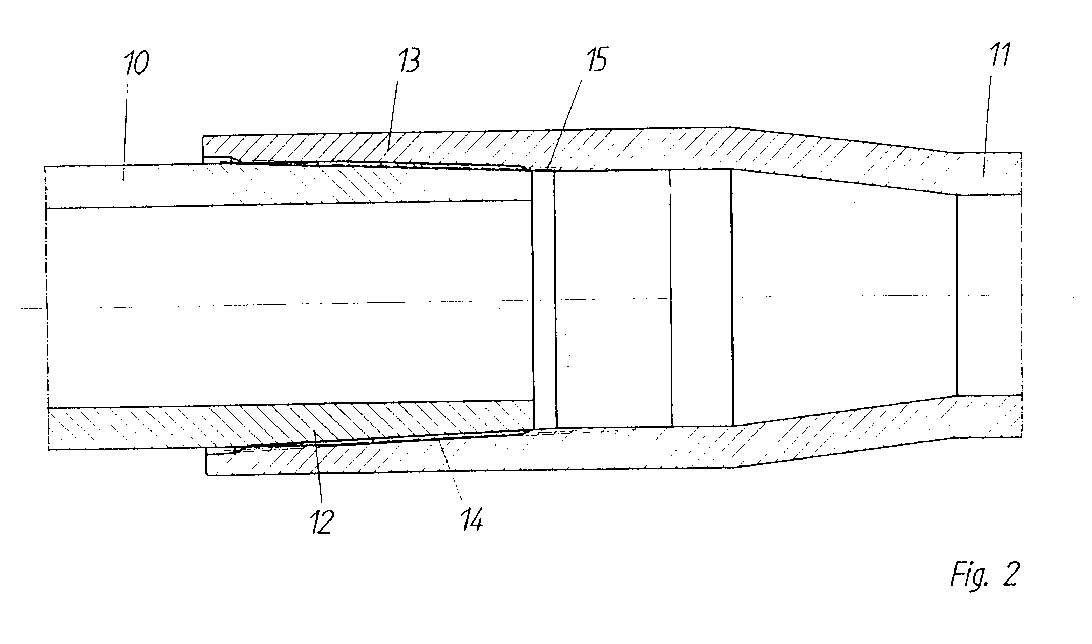

In den Figuren 1 und 2 sind in einem Längsschnitt typische Rohrverbinder dargestellt, und zwar in Figur 1 mit einer Muffe und in Figur 2 als Integralverbindung. Der erstgenannte Rohrverbinder besteht aus einer Muffe 1, die mit zwei konisch ausgebildeten Gewindeabschnitten 2,3 versehen ist. Die beiden zu verbindenden Rohre 4,5 sind im Endbereich als Zapfenelement 6,7 ausgebildet und weisen einen komplementär zum Gewinde der Muffe 1 ebenfalls konisch ausgebildeten Gewindeabschnitt 8,9 auf. Auf die Darstellung der Einzelheiten des Dichtsitzes wird hier verzichtet, da dies nicht erfindungswesentlich ist. Im Unterschied zu Figur 1 entfällt bei der in Figur 2 dargestellten Integralverbindung die Muffe. Die beiden zu verbindenden Rohre 10,11 sind in ihren Endbereichen zum einen als Zapfenelement 12 und zum anderen als Muffenelement 13 ausgebildet. Beide Elemente 12,13 weisen je einen komplementär zueinander konisch ausgebildeten Gewindeabschnitt 14,15 auf.

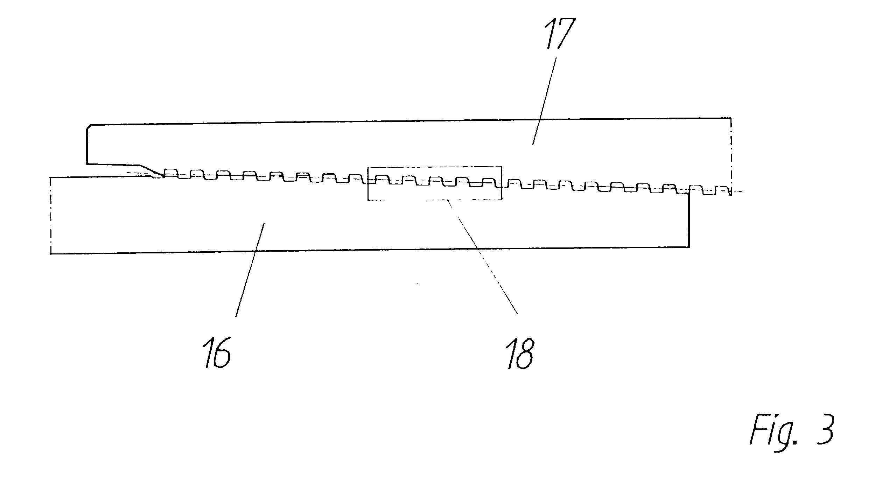

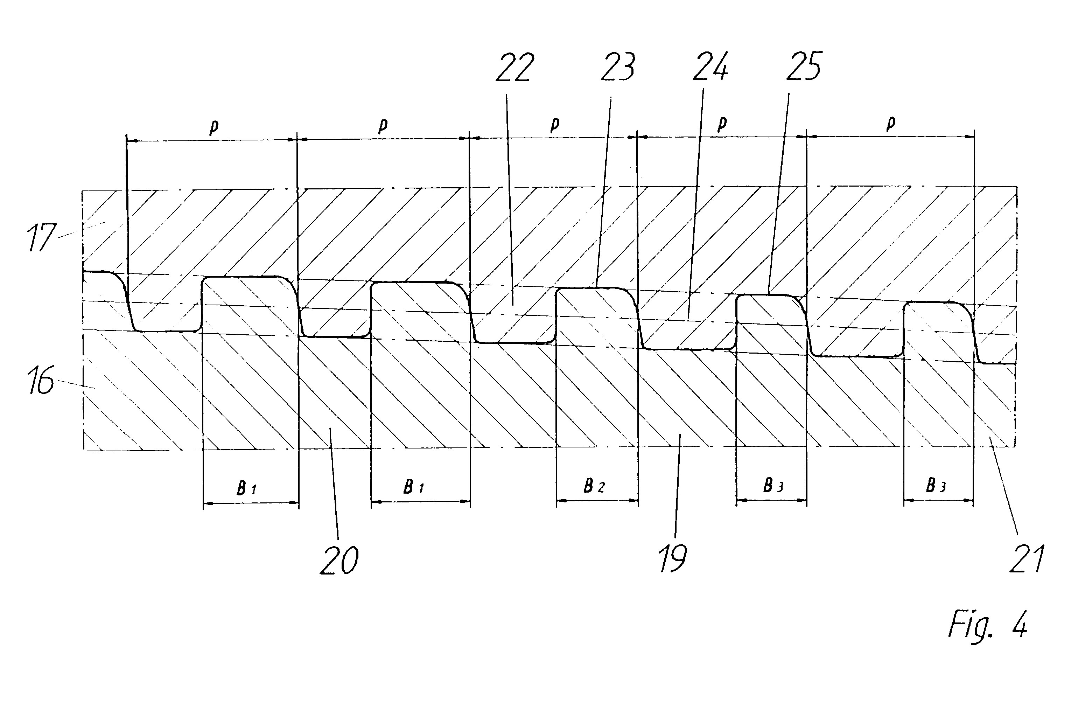

In Figur 3 ist an einem skizzenartigen Längsschnitt ein Gewindebereich mit einer erfindungsgemäßen lokalen Verspannung dargestellt. Unabhängig, ob der Rohrverbinder eine Muffen- oder Integralverbindung ist, soll für diese und die nachfolgenden Figuren 4 und 5 gelten, daß das unten liegende Teil des Rohrverbinders das Zapfenelement 16 und das oben liegende Teil das Muffenelement 17 sein soll. Durch das eingezeichnete Kästchen 18 soll die erfindungsgemäße lokale Verspannung angedeutet werden, wobei aus Maßstabsgründen in dieser Figur die Einzelheiten nicht zu erkennen sind. Eine detailliertere Erläuterung folgt in den Figuren 4 und 5. In der Beschreibung wurde schon darauf hingewiesen, daß der Bereich der lokalen Verspannung 18 wahlweise am Anfang und am Ende sowie in mehrfacher Anordnung über die Gewindelänge verteilt angeordnet sein kann.

Figur 4 zeigt in einem vergrößerten Maßstab eine der möglichen Ausführungsformen der erfindungsgemäßen lokalen Verspannung. Die Gewindesteigung, hier mit dem Symbol p gekennzeichnet, ist, wie gut zu erkennen ist, in dem besagten Abschnitt 19 sowie in den beiden angrenzenden Abschnitten 20,21 konstant. Die Breite des Zahnes im Zapfenelement 16 ist mit dem großen Buchstaben B gekennzeichnet. Im linken Abschnitt 20 des Zapfenelementes 16 sind zwei Zähne mit der konstanten Breite B₁ dargestellt. Erfindungsgemäß ändert sich im anschließenden Abschnitt 19 diese Breite von B1 auf B2, wobei gilt B2 kleiner B1. Der nächstfolgende Zahn weist eine Breite B3 auf, wobei gilt B3 kleiner B2 kleiner Bl. Im anschließenden Abschnitt 21 weisen die Zähne wieder eine konstante Breite B3 auf. Die dazugehörigen Zahnlücken im Muffenelement 17 sind entsprechend ausgebildet. Für den Abschnitt 19 bedeutet dies, daß die Veränderung der Zahnbreite von B1 auf B2 zu einer geringeren Zahnlücke führt, im gleichen Maße aber der Zahn 22 des Muffenelementes 17 an Breite zunimmt. Die Summe aus der Breite des Zahnes 22 mit der Weite der dazugehörigen Zahnlücke 23 ist konstant, Rind zwar gleich der Gewindesteigung p. Für die nächste Paarung 24,25 gilt die gleiche Bedingung. Im gleichen Maße wie die Zahnbreite B3 im Zapfenelement 16 abnimmt, nimmt die Breite des Zahnes 24 im Muffenelement zu. Die Summe aus Zahnbreite 24 mit der dazugehörigen Lückenweite 25 ist wieder konstant und gleich der Gewindesteigung p. Unabhängig davon wie das Ausgangsverhältnis von Zahnbreite zur Lückenweite gewählt wird, verändert sich dieses Verhältnis im erfindungsgemäßen Abschnitt 19 und ist im angrenzenden Abschnitt 21 qualitativ umgekehrt. Damit die Verschraubbarkeit einer solchen Gewindeausbildung sichergestellt ist, muß die jeweils breitere Zahnlücke im Muffen- und im Zapfenelement stirnseitig betrachtet, sich am Gewindeanfang befinden. Anderenfalls würde der breitere Zahn in der schmaleren Lücke festklemmen.

In Fig. 5 ist in einem vergleichbaren Längsschnitt im vergrößerten Maßstab eine erfindungsgemäße Verspannung dargestellt. Im Unterschied zu Figur 4 ist aber hier das Zahnflankenspiel mit berücksichtigt. In diesem hier gezeigten Ausführungsbeispiel tritt nach dem Verschrauben das Zahnflankenspiel außerhalb des Keilgangbereiches 19 an der Last-26 und an der Führungsflanke 27 auf. Im Keilgangbereich 19 kommen nach dem Verschrauben die Flanken kraftschlüssig zur Anlage. Alternativ ist es auch möglich, das Zahnflankenspiel nur an der Lastflanke 26 oder nur an der Führungsflanke 27 vorzusehen. Diese Variationen haben entsprechenden Einfluß auf die Zahnlastverteilung bei axialen Belastungen.

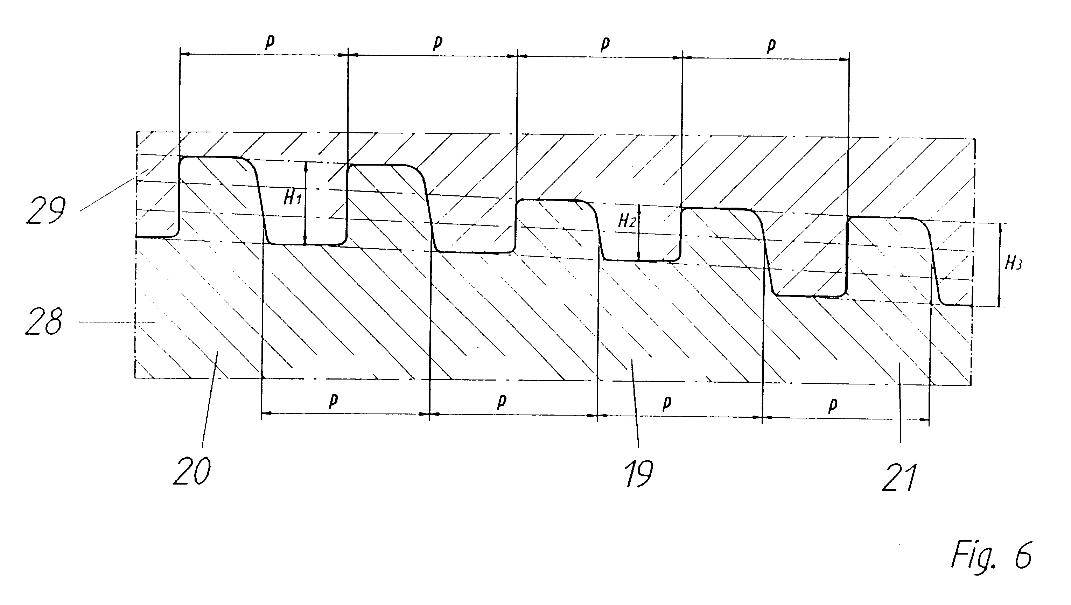

Figur 6 zeigt im gleichen vergrößerten Maßstab und im Längsschnitt eine Variante des nicht zur Erfindung gehörige Keilganges. Im Unterschied zu den Figuren 4 und 5 wird hier nicht die Zahnbreite, sondern die Zahnhöhe verändert. Ausgehend von einer Zahnhöhe H1 im Zapfenelement 28 und Muffenelement 29 ändert sich die Zahnhöhe im Keilgangbereich 19 in die Höhe H2, wobei gilt, H2 kleiner H1.

Im anschließenden Abschnitt 21 ändert sich die Zahnhöhe in H3, wobei gilt H3 ist gleich H1 mit dem Unterschied, daß die Zähne mit der Zahnhöhe H1 um den Betrag H1 minus H2 radial nach innen versetzt sind. In dieser Darstellung wird aber deutlich, daß die Variation der Zahnhöhe eine große radiale Wanddicke im Gewindeabschnitt erfordert, damit die verbleibende Restwanddicke für die Übertragung der Kräfte und Lasten ausreichend ist.

## Patentansprüche

1. Rohrverbinder mit einem Muffenelement, das ein Innengewinde und mit einem Zapfenelement, das ein Außengewinde aufweist,
dadurch gekennzeichnet,
daß das Gewinde des Zapfen-(16) und Muffenelementes (17) wenigstens einen Abschnitt (19) mit mindestens einem halben Gewindegang aufweist, dessen Zahnbreite (B) und Lückenweite verschieden ist von dem (den) unmittelbar angrenzenden Abschnitt(en), wobei in diesem abweichenden Abschnitt (19) eine gegenläufige Veränderung der Breite des Gewindezahnes und der Breite der Gewindelücke, je um das gleiche Maß, stattfindet, und zwar so, daß im Falle zweier unmittelbar angrenzender Abschnitte (20,21) diese ein geändertes Verhältnis von Zahnbreite zu Lückenweite aufweisen, aber die Summe von Zahnbreite und Lückenweite und damit Gewindesteigung (P) konstant bleibt.

2. Rohrverbinder nach Anspruch 1,
**dadurch gekennzeichnet,**
daß der abweichende Abschnitt (19) in Verschraubrichtung gesehen am Gewindeanfang liegt.

3. Rohrverbindung nach Anspruch 1,
**dadurch gekennzeichnet,**
daß der abweichende Abschnitt (19) in Verschraubrichtung gesehen am Gewindeende liegt.

4. Rohrverbindung nach Anspruch 1,
**dadurch gekennzeichnet,**
daß der abweichende Abschnitt (19) mittig im Gewinde liegt.

5. Rohrverbindung nach Anspruch 1,
**dadurch gekennzeichnet,**
daß der abweichende Abschnitt (19) an einem beliebigen geeigneten Ort im Gewinde liegt.

6. Rohrverbindung nach einem der vorhergehenden Ansprüche 1 bis 5,
**dadurch gekennzeichnet,**
daß das Gewinde des Zapfen-(16) und Muffenelementes (17) mehr als einen abweichenden Abschnitt (19) aufweist.

7. Rohrverbindung nach den Ansprüchen 1 bis 6,
**dadurch gekennzeichnet,**
daß das Gewinde des Zapfen- (16) und Muffenelementes (17) mehrgängig ist und der abweichende Abschnitt synchrone Gewindegänge aufweist.

8. Rohrverbindung nach den Ansprüchen 1 bis 6,
**dadurch gekennzeichnet,**
daß das Gewinde des Zapfen-(16) und Muffenelementes (17) mehrgängig ist und der abweichende Abschnitt nicht synchrone Gewindegänge aufweist.

9. Rohrverbinder nach einem der vorhergehenden Ansprüche 1 bis 8,
**dadurch gekennzeichnet,**
daß das Gewinde im Zapfen-(16) und Muffenelement (17) so gestaltet ist, daß nach dem Verschrauben außerhalb des abweichenden Abschnittes die Last-(26) und/oder Führungsflanke (27) ein Zahnflankenspiel aufweisen.

10. Rohrverbinder nach einem der vorhergehenden Ansprüche 1 bis 9,
**dadurch gekennzeichnet,**
daß das Gewinde kegelig ist.

11. Rohrverbinder nach einem der vorhergehenden Ansprüche 1 bis 9,
**dadurch gekennzeichnet,**
daß das Gewinde zylindrisch ist.

12. Rohrverbinder nach einem der vorhergehenden Ansprüche 1 bis 11,
**dadurch gekennzeichnet,**
daß Zapfen- und Muffenelemente einen metallischen Dichtsitz aufweisen.

13. Rohrverbinder nach einem der vorhergehenden Ansprüche 1 bis 11,
**dadurch gekennzeichnet,**
daß Zapfen- und Muffenelemente Axialschultern aufweisen.

## Claims

1. A pipe connector having a socket element which has an internal thread, and a spigot element which has an external thread, characterised in that the thread of the spigot (16) and socket element (17) has at least one section (19) having at least half a thread turn, the tooth width (B) and space width of which is different from the section(s) immediately adjacent thereto, with an opposed change in the width of the thread tooth and the width of the thread space, each by the same amount, being effected in this deviating section (19), such that in the case of two immediately adjacent sections (20, 21) the latter have an altered ratio of tooth width to space width, but the total of the tooth width and space width, and hence thread pitch (P), remains constant.

2. A pipe connector according to Claim 1, characterised in that the deviating section (19), viewed in the direction of screwing, is located at the beginning of the thread.

3. A pipe connection according to Claim 1, characterised in that the deviating section (19), viewed in the direction of screwing, is located at the end of the thread.

4. A pipe connection according to Claim 1, characterised in that the deviating section (19) is located centrally in the thread.

5. A pipe connection according to Claim 1, characterised in that the deviating section (19) is located at any suitable location in the thread.

6. A pipe connection according to one of the preceding Claims 1 to 5, characterised in that the thread of the spigot (16) and socket element (17) has more than one deviating section (19).

7. A pipe connection according to Claims 1 to 6, characterised in that the thread of the spigot (16) and socket element (17) is a multiple thread and the deviating section has synchronous thread turns.

8. A pipe connection according to Claims 1 to 6, characterised in that the thread of the spigot (16) and socket element (17) is a multiple thread and the deviating section does not have synchronous thread turns.

9. A pipe connector according to one of the preceding Claims 1 to 8, characterised in that the thread in the spigot (16) and socket element (17) is designed such that after screwing outside the deviating section the load flank (26) and/or guide flank (27) has a tooth flank clearance.

10. A pipe connector according to one of the preceding Claims 1 to 9, characterised in that the thread is conical.

11. A pipe connector according to one of the preceding Claims 1 to 9, characterised in that the thread is cylindrical.

12. A pipe connector according to one of the preceding Claims 1 to 11, characterised in that the spigot and socket elements have a metallic sealing seat.

13. A pipe connector according to one of the preceding Claims 1 to 11, characterised in that the spigot and socket elements have axial shoulders.

## Revendications

1. Raccord pour tubes comportant un élément en forme de manchon, qui comporte un taraudage, et un élément en forme d'embout rentrant, qui possède un filetage extérieur,
caractérisé en ce
que le filetage de l'élément en forme d'embout rentrant (16) et de l'élément en forme de manchon (17) possède au moins un tronçon (19) présentant au moins un demi-pas de filetage, dont la largeur (B) des dents et l'entredent sont différents de ceux du ou des tronçons directement adjacents, et dans lequel dans ce tronçon différent (19) il existe des variations, en des sens opposés, de la largeur de la dent du filetage et de la largeur de l'entredent du filetage, respectivement de la même valeur, et ce de telle sorte que dans le cas de deux tronçons (20, 21) directement adjacents, ces tronçons possèdent un rapport modifié de la largeur de dent à l'entredent, mais que la somme de la largeur de dent et de l'entredent et par conséquent le pas (P) du filetage restent constants.

2. Raccord pour tubes selon la revendication 1,
caractérisé en ce
que le tronçon différent (19) est situé au début du filetage, lorsqu'on regarde dans la direction de vissage.

3. Raccord pour tubes selon la revendication 1,
caractérisé en ce
que le tronçon différent (19) est situé à l'extrémité du filetage, lorsqu'on regarde dans la direction de vissage.

4. Raccord pour tubes selon la revendication 1,
caractérisé en ce
que le tronçon différent (19) est situé au milieu du filetage.

5. Raccord pour tubes selon la revendication 1,
caractérisé en ce
que le tronçon différent (19) est situé en un emplacement approprié quelconque du filetage.

6. Raccord pour tubes selon l'une des revendications précédentes 1 à 5, caractérisé en ce
que le filetage de l'élément en forme d'embout rentrant (16) et de l'élément en forme de manchon (17) possède plus d'un tronçon différent (19).

7. Raccord pour tubes selon les revendications 1 à 6, caractérisé en ce
que le filetage de l'élément en forme d'embout rentrant (16) et l'élément en forme de manchon (17) est à filets multiples et que le tronçon différent possède des pas de filetage synchrones.

8. Raccord pour tubes selon les revendications 1 à 6, caractérisé en ce
que le filetage de l'élément en forme d'embout rentrant (16) et l'élément en forme de manchon (17) est à filets multiples et que le tronçon différent possède des pas de filetage non synchrones.

9. Raccord pour tubes selon les revendications 1 à 8, caractérisé en ce
que le filetage de l'élément en forme d'embout rentrant (16) et de l'élément en forme de manchon (17) est agencé de telle sorte qu'après le vissage, le flanc de charge (26) et/ou le flanc de guidage (27) présentent un jeu au niveau du flanc des dents, à l'extérieur du tronçon différent.

10. Raccord pour tubes selon l'une des revendications précédentes 1 à 9, caractérisé en ce
que le filetage est conique.

11. Raccord pour tubes selon l'une des revendications 1 à 9 précédentes, caractérisé en ce
que le filetage est cylindrique.

12. Raccord pour tubes selon l'une des revendications 1 à 11, caractérisé en ce
que l'élément en forme d'embout rentrant et l'élément en forme de manchon possèdent un siège d'étanchéité métallique.

13. Raccord pour tubes selon l'une des revendications 1 à 11, caractérisé en ce
que les éléments en forme d'embout rentrant et de manchon possèdent des épaulements axiaux.
